(19) Europäisches Patentamt
European Patent Office
Office européen des brevets

(11) EP 3 057 698 B1

(12) # FASCICULE DE BREVET EUROPEEN

(45) Date de publication et mention de la délivrance du brevet:
**06.12.2017 Bulletin 2017/49**

(21) Numéro de dépôt: **14786191.8**

(22) Date de dépôt: **17.10.2014**

(51) Int Cl.:
***B01F 13/00*** $^{(2006.01)}$ ***B01J 13/04*** $^{(2006.01)}$
***B01J 13/10*** $^{(2006.01)}$ ***B01F 3/08*** $^{(2006.01)}$

(86) Numéro de dépôt international:
**PCT/EP2014/072362**

(87) Numéro de publication internationale:
**WO 2015/055839 (23.04.2015 Gazette 2015/16)**

(54) **DISPOSITIF DE PRODUCTION D'ÉLÉMENTS DISPERSÉS, ENSEMBLE ET PROCÉDÉ DE PRODUCTION ASSOCIÉS**

VORRICHTUNG ZUR HERSTELLUNG DISPERSER ELEMENTE UND ZUGEHÖRIGE ANORDNUNG UND HERSTELLUNGSVERFAHREN

DEVICE FOR PRODUCING DISPERSED ELEMENTS, AND ASSOCIATED ASSEMBLY AND PRODUCTION METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.10.2013 FR 1360099**

(43) Date de publication de la demande:
**24.08.2016 Bulletin 2016/34**

(73) Titulaire: **Capsum**
**13013 Marseille (FR)**

(72) Inventeurs:
- **GOUTAYER, Mathieu**
  **F-35400 Saint Malo (FR)**
- **PAFUMI, Yan Eric**
  **F-13120 Gardanne (FR)**
- **TESAN, Javier Angel**
  **F-13005 Marseille (FR)**

(74) Mandataire: **Lavoix**
**2, place d'Estienne d'Orves**
**75441 Paris Cedex 09 (FR)**

(56) Documents cités:
**WO-A1-03/059503**
**WO-A2-2012/120043**
**US-A- 4 481 157**
**US-A- 5 795 590**

EP 3 057 698 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un dispositif de production d'éléments dispersés selon le préambule de la revendication 1.

Un tel dispositif est destiné à être inséré dans un ensemble de production d'éléments dispersés comprenant un système de distribution de fluide.

Les éléments dispersés sont par exemple formés de capsules de taille millimétrique dispersées dans une phase continue. De telles capsules comportent généralement un coeur liquide encapsulé dans une enveloppe gélifiée.

En variante, les éléments sont formés par une dispersion de gouttes. Les gouttes sont formées par une première phase interne liquide pouvant contenir un principe actif cosmétique ou biologique, et sont dispersées dans une deuxième phase externe liquide formant une phase continue. La première phase interne est par exemple huileuse, et la deuxième phase externe est par exemple aqueuse. Une membrane fine de coacervat assure l'intégrité des gouttes.

Ces types d'éléments dispersés sont utilisés dans de nombreux domaines techniques, comme par exemple l'agroalimentaire, la cosmétique ou le médical.

Il existe déjà dans l'état de la technique des dispositifs de production d'éléments dispersés par microfluidique. Ce type de dispositifs comporte généralement deux ou trois conduits d'écoulement de fluide s'étendant coaxialement le long d'un axe longitudinal. Les fluides s'écoulent verticalement le long des conduits jusqu'à l'extérieur du dispositif pour former les éléments dispersés.

Toutefois, ce type de dispositifs ne permet pas toujours de contrôler précisément la taille des éléments dispersés produits. En outre, ce type de dispositifs ne permet pas de produire des éléments dispersés en quantité industrielle, de manière très reproductible.

Il est également connu de WO 03/059503 A un dispositif de production de microcapsules.

Un but de l'invention est donc de fournir un dispositif de production d'éléments dispersés permettant de maîtriser la taille des éléments dispersés formés de manière très reproductible et étant facile à fabriquer.

Un autre but de l'invention est de fournir un ensemble de production d'éléments dispersés permettant la production des éléments dispersés en quantité industrielle, les éléments dispersés présentant des caractéristiques très similaires.

A cet effet, l'invention a pour objet un dispositif de production d'éléments dispersés selon la partie caractérisante de la revendication 1.

Le dispositif selon l'invention peut comprendre l'une ou plusieurs des caractéristiques des revendications 2 à 6, ainsi que les caractéristiques suivantes:

- le canal de liaison externe présente une section transversale inférieure à la section transversale de la voie d'amenée externe ;
- le canal de liaison externe présente une forme coudée.

L'invention concerne en outre un ensemble de production d'éléments dispersés selon la revendication 7.

L'ensemble selon l'invention peut comprendre une ou plusieurs des caractéristiques des revendications 8 à 11. Dans une variante, chaque dispositif de production d'éléments dispersés de l'ensemble selon l'invention comporte un conduit interne de distribution du premier fluide, le conduit interne définissant un volume intérieur, un conduit externe de distribution du deuxième fluide, le conduit interne et le conduit externe s'étendant coaxialement le long d'un axe longitudinal,
le dispositif étant dépourvu de tube métallique s'étendant suivant l'axe longitudinal et étant disposé dans le volume intérieur du conduit interne et/ou dans le prolongement aval du conduit interne et/ou du conduit externe.

L'invention concerne en outre un procédé de production d'éléments dispersés selon la revendication 12.

Le procédé selon l'invention peut en outre comprendre les caractéristiques de la revendication 13.

L'invention concerne en outre un système de distribution de fluide, le système comprenant une première rampe de distribution du premier fluide et une deuxième rampe de distribution du deuxième fluide, chaque rampe de distribution comprenant un collecteur tubulaire comportant au moins un orifice d'entrée et une pluralité d'orifices de sorties, le système comprenant en outre des premiers et deuxièmes raccordements formant chacun une perte de charge, chaque orifice de sortie étant relié en aval à un des raccordements, chaque premier raccordement raccordant la première rampe au conduit interne d'un des dispositifs de production, et chaque deuxième raccordement raccordant la deuxième rampe au conduit externe d'un des dispositifs de production.

L'invention sera mieux comprise à la lecture de la description qui va suivre, donnée uniquement à titre d'exemple, et faite en se référant aux dessins annexés, sur lesquels :

- la figure 1 est une vue en perspective partielle d'un système de distribution de fluide selon l'invention ;
- la figure 2 est une vue en perspective d'un organe d'amenée de fluide selon l'invention ;

- la figure 3 est une vue en perspective d'un raccordement du système de distribution de fluide selon l'invention ;
- la figure 4 est une vue en coupe d'un dispositif de production d'éléments dispersés, selon un premier mode de réalisation de l'invention ; et
- la figure 5 est une vue en coupe d'un dispositif de production d'éléments dispersés, selon une variante de réalisation de l'invention.

Dans tout ce qui suit, les termes « amont » et « aval » s'entendent par rapport au sens normal de circulation d'un fluide, et les termes « supérieur » et « inférieur » s'entendent par rapport aux orientations représentées sur les figures.
Un premier ensemble de production 2 d'éléments dispersés 8 selon l'invention est illustré par les figures 1 à 4.
Cet ensemble 2 comprend un système 4 de distribution de fluide, visible sur les figures 1 à 3, et au moins un dispositif 6 de production d'éléments dispersés 8, visible sur la figure 4. L'ensemble 2 comportent de préférence une pluralité de dispositifs de production 6 identiques, raccordés en parallèle les uns aux autres au système de distribution de fluide 4.
Chaque dispositif de production 6 est ainsi raccordé en amont au système 4 de distribution de fluide. Le ou chaque fluide destiné à la production d'éléments dispersés 8 s'écoule dans le système de distribution 4, puis dans le dispositif de production 6 pour former les éléments dispersés.
L'ensemble de production 2 est destiné à produire des éléments dispersés 8 visibles sur la figure 4. Chaque élément dispersé 8 comprend un coeur 10 comportant au moins un premier fluide 12, et une enveloppe 14 propre à retenir le coeur 10, l'enveloppe 14 étant obtenue à partir d'un deuxième fluide 16.
Dans un premier exemple, l'ensemble de production 2 est destiné à produire des éléments dispersés 8 tels que des capsules 9. Chaque capsule 9 comporte un coeur fluide 10 et une enveloppe 14 extérieure gélifiée entourant la totalité de la surface extérieure du coeur 10. Les capsules 9 sont par exemple des capsules telles que décrites dans la demande de brevet WO 2010/063937.
Dans cet exemple, chaque capsule 9 est de forme sphérique et présente avantageusement un diamètre extérieur supérieur à 100 microns et avantageusement millimétrique. Le diamètre des capsules 9 est généralement inférieur à 5 mm et est compris notamment entre 1 mm et 3 mm.
Le coeur 10 contient au moins un premier fluide 12 choisi avantageusement parmi un produit biologiquement actif, un produit cosmétique, ou un produit comestible propre à être consommé.
Lorsque le coeur 10 contient un produit biologiquement actif, il est choisi avantageusement parmi les anticoagulants, les anti-thrombogéniques, les agents antimitotiques, les agents anti-prolifération, antiadhésion, anti-migration, les promoteurs d'adhésion cellulaire, les facteurs de croissance, les molécules antiparasitaires, les anti-inflammatoires, les angiogéniques, les inhibiteurs de l'angiogenèse, les vitamines, les hormones, les protéines, les antifongiques, les molécules antimicrobiennes, les antiseptiques ou les antibiotiques.
En variante, le coeur 10 contient des agents réactifs tels que des protéines ou des réactifs destinés à former un bioréacteur, ou à former des cellules artificielles pour des implants.
Un produit cosmétique pouvant être contenu dans le coeur 10 est par exemple cité dans la DIRECTIVE DU CONSEIL du 27 juillet 1976 concernant le rapprochement des législations des États membres relatives aux produits cosmétiques (76/768/CEE / JO L 262 du 27.9.1976, p. 169). Ce produit est par exemple une crème, une émulsion, une lotion, un gel et une huile pour la peau (mains, visage, pieds, etc.), un fond de teint (liquide, pâte, poudres), un masques de beauté (à l'exclusion des produits d'abrasion superficielle de la peau par voie chimique), fonds de teint (liquides, pâtes, poudres), une poudre pour maquillage, poudre à appliquer après le bain, poudres pour l'hygiène corporelle, etc, savons de toilette, savons déodorants, etc. parfums, eaux de toilette et eau de Cologne, une préparation pour bains et douches (sels, mousses, huiles, gels, etc.), un produit de soins capillaires : teintures capillaires, décolorants, pour l'ondulation, le défrisage, la fixation de mise en plis de nettoyage (lotions, poudres, shampoings), d'entretien pour la chevelure (lotions, crèmes, huiles), de coiffage (lotions, laques, brillantines), un produit de nettoyage (lotions, poudres, shampoings), un produit pour le rasage (savons, mousses, lotions, etc.), un produits de maquillage et démaquillage du visage et des yeux, un produit destiné à être appliqué sur les lèvres , un produit pour les soins et le maquillage des ongles, un produit pour soins intimes externes, un produit solaire, un produit de bronzage sans soleil, un produit permettant de blanchir la peau, un produit antirides.
Les produits comestibles propres à être consommés par un être humain ou par un animal sont avantageusement des purées de légumes ou de fruits telles que la purée de mangue, de la purée de poire, de la purée de coco, de la crème d'oignons, de poireaux, de carottes, ou d'autres préparations pouvant mélanger plusieurs fruits ou légumes. En variante, il s'agit d'huiles telles qu'une huile alimentaire, du type huile d'olive, huile de soja, huile de grains de raisin, huile de tournesol, ou toute autre huile extraite des végétaux. En variante, il s'agit de produits alcoolisés tels que des boissons alcoolisées.
Le coeur 10 se présente avantageusement sous la forme d'un liquide pur, d'une solution du ou de chaque premier fluide 12 dans un solvant liquide, d'une dispersion telle qu'une émulsion ou une suspension du ou de chaque

premier fluide 12 dans un liquide.

La viscosité du coeur est notamment inférieure à 2000 mPa.s.

Les viscosités sont mesurées par la méthode suivante.

On utilise un viscosimètre de type Brookfield avec un mobile (désigné par le terme anglais « Spindle ») de taille (No.) 05. On place environ 150 g de solution dans un bécher de 250 ml de volume, ayant un diamètre d'environ 7 cm de façon à ce que la hauteur du volume occupée par les 150 g de solution soit suffisante pour arriver à la jauge marquée sur le mobile. Ensuite, on démarre le viscosimètre sur une vitesse de 10 RPM et on attend que la valeur affichée sur l'écran soit stable.

La mesure est effectuée à 25° C et à pression ambiante (par exemple 1013 mbars).

Le coeur 10 est à base d'une phase majoritairement aqueuse ou au contraire d'une phase majoritairement huileuse.

L'enveloppe 14 gélifiée des capsules 9 comprend avantageusement un gel contenant de l'eau et au moins un polyélectrolyte réactif aux ions multivalents. Dans une variante avantageuse, l'enveloppe 14 contient en outre un agent tensioactif résultant de son procédé de fabrication. Par « polyélectrolyte réactif aux ions multivalents », on entend, au sens de la présente invention un polyélectrolyte susceptible de passer d'un état liquide dans une solution aqueuse à un état gélifié sous l'effet d'un contact avec une solution gélifiante contenant des ions multivalents tels que des ions d'un métal alcalino-terreux choisis par exemple parmi les ions calcium, les ions baryum, les ions magnésium.

Dans l'état liquide, les chaînes individuelles de polyélectrolyte sont sensiblement libres de s'écouler les unes par rapport aux autres. Une solution aqueuse de 2% en masse de polyélectrolyte présente alors un comportement purement visqueux aux gradients de cisaillement caractéristiques du procédé de mise en forme. La viscosité de cette solution à cisaillement nul est entre 50 mPa.s et 10000 mPa.s avantageusement entre 3000 mPa.s et 7000 mPa.s.

Les chaînes individuelles de polyélectrolyte dans l'état liquide présentent avantageusement une masse molaire supérieure à 65000 g/moles.

Dans l'état gélifié, les chaînes individuelles de polyélectrolyte forment, avec les ions multivalents, un réseau tridimensionnel cohérent qui retient le coeur et empêche son écoulement. Les chaînes individuelles sont retenues les unes par rapport aux autres et ne peuvent pas s'écouler librement les unes par rapport aux autres. Dans cet état, la viscosité du gel formé est infinie. De plus le gel a un seuil de contrainte à l'écoulement. Ce seuil de contrainte est supérieur à 0,05 Pa. Le gel possède également un module d'élasticité non-nul et supérieur à 35 kPa.

Le gel tridimensionnel de polyélectrolyte contenu dans l'enveloppe 14 emprisonne de l'eau et l'agent tensioactif lorsqu'il est présent. La teneur massique du polyélectrolyte dans l'enveloppe 14 est par exemple comprise entre 0,5 % et 5 %.

Le polyélectrolyte est de préférence un polymère biocompatible inoffensif pour le corps humain. Il est par exemple produit biologiquement.

Avantageusement, il est choisi parmi les polysaccharides, polyélectrolytes de synthèse à base d'acrylates (polyacrylate de sodium, de lithium, de potassium ou d'ammonium, ou polyacrylamide), de polyélectrolytes de synthèse à base de sulfonates (poly(styrène sulfonate) de sodium, par exemple). Plus particulièrement, le polyélectrolyte est choisi parmi un alginate d'alcalino-terreux, tel qu'un alginate de sodium ou un alginate de potassium, une gellane ou une pectine.

Les alginates sont produits à partir d'algues brunes appelées « laminaires », désignées par le terme anglais « sea weed ».

De tels alginates présentent avantageusement une teneur en $\alpha$-L-guluronate supérieure à environ 50%, de préférence supérieure à 55%, voire supérieure à 60%.

L'agent tensioactif est avantageusement un tensioactif anionique, un tensioactif nonionique, un tensioactif cationique ou un mélange de ceux-ci. La masse moléculaire de l'agent tensioactif est comprise entre 150 g/mol et 10000 g/mol, avantageusement entre 250 g/mol et 1500 g/mol.

Dans le cas où le tensioactif est un tensioactif anionique, il est par exemple choisi parmi un alkylsulfate, un alkyle sulfonate, un alkylarylsulfonate, un alkylphosphate alcalin, un dialkylsulfosuccinate, un sel d'alcalino-terreux d'acides gras saturés ou non. Ces tensioactifs présentent avantageusement au moins une chaîne hydrocarbonée hydrophobe présentant un nombre de carbones supérieur à 5, voire 10 et au moins un groupement anionique hydrophile, tel qu'un sulfate, un sulfonate ou un carboxylate lié à une extrémité de la chaîne hydrophobe.

Dans le cas où le tensioactif est un tensioactif cationique, il est par exemple choisi parmi un sel d'halogénure d'alkylpyridium ou d'alkylammonium comme le chlorure ou le bromure de n-éthyldodecylammonium, le chlorure ou le bromure de cétylammonium (CTAB). Ces tensioactifs présentent avantageusement au moins une chaîne hydrocarbonée hydrophobe présentant un nombre de carbones supérieur à 5, voire 10 et au moins un groupement cationique hydrophile, tel qu'un cation d'ammonium quaternaire.

Dans le cas où le tensioactif est un tensioactif nonionique, il est par exemple choisi parmi des dérivés polyoxyéthylénés et/ou polyoxypropylénés des alcools gras, des acides gras, ou des alkylphénols, des arylphénols, ou parmi des alkyls glucosides, des polysorbates, des cocamides.

La teneur massique en agent tensioactif dans l'enveloppe 14 est supérieure à 0,001% et est avantageusement supérieure à 0,1 %.

Dans cet exemple, l'enveloppe 14 est constituée exclusivement de polyélectrolyte, d'agent tensioactif, et d'eau. La somme des teneurs massiques en polyélectrolyte, en agent tensioactif, et en eau est alors égale à 100%.

En variante, chaque capsule 9 est du type décrit dans la demande FR 10 61404 de la Demanderesse. Chaque capsule 9 comporte alors un coeur 10 qui contient une goutte intermédiaire d'une phase intermédiaire 11 placée au contact de l'enveloppe 14 gélifiée. Le coeur 10 comporte au moins une goutte interne d'une phase interne disposée dans la goutte intermédiaire.

En variante, le dispositif de production 6 est destiné à former une dispersion de gouttes 17 du type décrit dans la demande WO 2012/120043, les gouttes 17 étant illustrées par exemple sur la figure 5. La dispersion de gouttes 17 est formée d'un premier fluide 12 formant une première phase dispersée dans un deuxième fluide 16 formant une deuxième phase sensiblement immiscible avec la première phase.

La première phase formant les gouttes est avantageusement une phase huileuse, et la deuxième phase dans laquelle les gouttes 17 sont dispersées est une avantageusement une phase aqueuse. La phase huileuse est immiscible avec la phase aqueuse.

L'huile constituant la phase huileuse est par exemple une huile siliconée, une huile synthétique, une huile minérale, une huile végétale ou un mélange de ces huiles. Elle comporte avantageusement des molécules d'intérêt cosmétique, tels que des actifs cosmétiques.

Les gouttes 17 comportent un coeur 10 constitué du premier fluide 12 et une enveloppe 14 formée à partir du deuxième fluide 16 et formant une écorce 14 de retenue et de stabilisation du coeur 10. L'écorce 14 est formée par un coacervat entre un premier polymère précurseur et un deuxième polymère précurseur.

Les gouttes 17 présentent un diamètre supérieur à 500 micromètres et avantageusement inférieur à 3000 micromètres, notamment compris entre 800 micromètres et 2000 microns. L'écorce 14 présente une épaisseur inférieure à 1000 nanomètres, notamment comprise entre 1 nanomètres et 500 nanomètres.

L'écorce 14 entourant les gouttes 17 de l'émulsion est rigidifiée, ce qui présente pour avantage de conférer une résistance supérieure aux gouttes 17 et de diminuer, voire d'empêcher, leur coalescence.

Cette écorce 14 est typiquement formée par coacervation, c'est-à-dire par précipitation de polymères chargés de charges opposées. Au sein d'un coacervat, les liaisons liant les polymères chargés entre eux sont de type ionique, et sont généralement plus fortes que des liaisons de type électrostatique présentes au sein d'une membrane de type tensioactif.

L'écorce 14 est formée par coacervation d'au moins deux polymères chargés de polarité opposée (ou polyélectrolyte) et de préférence en présence d'un premier polymère, de type anionique, et d'un deuxième polymère, différent du premier polymère, de type cationique.

Dans le cadre de la présente description, on entend par « polymère de type anionique » un polymère comportant des fonctions chimiques de type anionique. On peut aussi parler de polyélectrolyte anionique.

Par « fonction chimique de type anionique », on entend une fonction chimique AH capable de céder un proton pour donner une fonction $A^-$. Selon les conditions du milieu dans lequel il se trouve, le polymère de type anionique comporte donc des fonctions chimiques sous forme AH, ou bien sous forme de sa base conjuguée $A^-$.

Comme exemple de fonctions chimiques de type anionique, on peut citer les fonctions acide carboxylique -COOH, éventuellement présentes sous forme d'anion carboxylate $-COO^-$.

Comme exemple de polymère de type anionique, on peut citer tout polymère formé par la polymérisation de monomères dont au moins une partie porte des fonctions chimiques de type anionique, tel que des fonctions acide carboxylique. De tels monomères sont par exemple l'acide acrylique, l'acide maléique, ou tout monomère éthyléniquement insaturé comportant au moins une fonction acide carboxylique.

Parmi les exemples de polymère de type anionique appropriés à la mise en oeuvre de l'invention, on peut citer les copolymères d'acide acrylique ou d'acide maléique et d'autres monomères, tels que l'acrylamide, les acrylates d'alkyle, les acrylates d'alkyle en $C_5$-$C_8$, les acrylates d'alkyle en $C_{10}$-$C_{30}$, les méthacrylates d'alkyle en $C_{12}$-$C_{22}$, les méthacrylates méthoxypolyéthylèneglycol, les acrylates d'hydroxyester.

Dans le cadre de la présente description, on entend par « polymère de type cationique » un polymère comportant des fonctions chimiques de type cationique. On peut aussi parler de polyélectrolyte cationique.

Par « fonction chimique de type cationique », on entend une fonction chimique B capable de capter un proton pour donner une fonction $BH^+$. Selon les conditions du milieu dans lequel il se trouve, le polymère de type cationique comporte donc des fonctions chimiques sous forme B, ou bien sous forme $BH^+$, son acide conjugué.

Comme exemple de fonctions chimiques de type cationique, on peut citer les fonctions amine primaire, secondaire et tertiaire, éventuellement présentes sous forme de cations ammoniums.

Comme exemple de polymère de type cationique, on peut citer tout polymère formé par la polymérisation de monomères dont au moins une partie porte des fonctions chimiques de type cationique, tel que des fonctions amine primaire, secondaire ou tertiaire.

De tels monomères sont par exemple l'aziridine, ou tout monomère éthyléniquement insaturé comportant au moins une fonction amine primaire, secondaire ou tertiaire.

Parmi les exemples de polymère de type cationique appropriés à la mise en oeuvre de l'invention, on peut citer l'amodiméthicone, dérivé d'un polymère silicone (polydiméthylsiloxane, aussi appelé diméthicone), modifié par des fonctions amine primaire et amine secondaire :

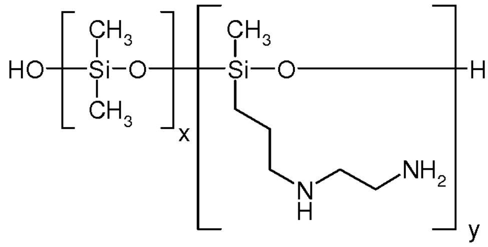

Amodiméthicone

On peut également citer des dérivés de l'amodiméthicone, comme par exemple des copolymères de l'amodiméthicone, l'aminopropyl diméthicone, et plus généralement des polymères silicones comportant des fonctions amines.

On peut citer le copolymère de bis-isobutyl PEG-14/amodiméthicone, le bis-cétéaryl amodiméthicone et le bis-hydroxy/méthoxy amodiméthicone.

On peut également citer les polymères de type polysaccharide comprenant des fonctions amine, tel que le chitosan ou les dérivés de gomme guar (chlorure d'hydroxypropyltrimonium guar).

On peut également citer les polymères de type polypeptide comprenant des fonctions amine, tel que la polylysine.

On peut également citer les polymères de type polyéthylèneimine comprenant des fonctions amine, tel que la polyéthylèneimine linéaire ou branchée.

La coacervation a généralement lieu en présence d'un premier polymère de type anionique et d'un deuxième polymère de type cationique, qui jouent le rôle d'agents de rigidification de la membrane.

La formation du coacervat entre ces deux polymères est généralement provoquée par une modification des conditions du milieu réactionnel (température, pH, concentration en réactifs, etc.). La réaction de coacervation résulte de la neutralisation de ces deux polymères chargés de polarités opposées et permet la formation d'une structure membranaire par interactions électrostatiques entre le premier et le deuxième polymère. La membrane ainsi formée autour de chaque goutte 17 encapsule totalement le coeur 10 et isole la première phase de la deuxième phase.

Le premier polymère est contenu initialement dans l'une de la première phase et de la deuxième phase, le deuxième polymère étant contenu initialement, avant la formation des gouttes 17, dans l'autre de la première phase et de la deuxième phase. Les deux polymères migrent ensuite à l'interface lors de la formation des gouttes 17 où ils forment l'écorce par coacervation.

Une dispersion avantageuse est telle que chaque goutte 17 comprend, en masse par rapport à la masse de ladite goutte 17 :

- de 0,05% à 10% d'un polymère $P_1$ de type anionique et hydrophile, et
- de 0,05% à 10% d'un polymère $P_2$ de type cationique et lipophile.

De préférence, chaque goutte 17 comprend, en masse par rapport à la masse de ladite goutte 17, de 0,1% à 5% d'un polymère $P_1$ de type anionique et hydrophile.

De préférence, chaque goutte 17 comprend, en masse par rapport à la masse de ladite goutte 17, de 0,1% à 5% d'un polymère $P_2$ de type cationique et lipophile.

Une dispersion avantageuse selon cette variante est telle que chaque goutte 17 comprend un polymère $P_1$, de type anionique et hydrophile, et un polymère $P_2$, de type cationique et lipophile, dans un rapport massique $P_1$:$P_2$ compris entre 1:10 et 10:1.

Les gouttes 17 ainsi formées sont avantageusement monodispersées.

Les gouttes 17 sont formées selon le procédé de formation de gouttes 17 décrit dans la demande WO 2012/120043.

Les gouttes 17 sont notamment formées au moyen d'un fluide intermédiaire 11 tel que décrit dans la demande WO 2012/120043. Le fluide intermédiaire est miscible avec le premier fluide 12. Il est par exemple composé d'une phase huileuse identique à la première phase ou miscible avec la première phase.

Le fluide intermédiaire 11 est par exemple composé d'au moins une huile choisie parmi le groupe comprenant

les huiles de silicone, les huiles minérales, les huiles végétales, les esters d'acide gras et/ou d'alcool gras, typiquement en C1 à C20, et les huiles compatibles avec les esters tels que les solvants apolaires.

Le fluide intermédiaire 11 est destiné à former une pellicule autour de la goutte formée dans le deuxième fluide externe 16. Le fluide intermédiaire 11 retarde la diffusion du premier polymère précurseur du coacervat présent dans le premier fluide interne 12 jusqu'à ce que le fluide intermédiaire 11 se soit mélangé avec le premier fluide interne 12.

En référence à la figure 1, le système de distribution 4 comprend une première rampe 18 de distribution du premier fluide 12, une deuxième rampe 20 de distribution du deuxième fluide 16 et une troisième rampe 22 de distribution du fluide intermédiaire 11. Le système 4 comporte en outre des premiers, deuxièmes et troisièmes raccordements 24, 26, 28, visibles sur la figure 3, raccordant le dispositif de production 6 respectivement aux première, deuxième et troisième rampes de distribution 18, 20, 22.

En variante, le système de distribution 4 ne comporte que la première rampe 18 de distribution du premier fluide 12 et la deuxième rampe 20 de distribution du deuxième fluide 16. En outre dans cette variante, le système 4 ne comporte que les premier et deuxième raccordements 24, 26 raccordant le dispositif de production 6 respectivement aux première et deuxième rampes de distribution 18, 20. Une telle variante est notamment particulièrement adaptée pour la formation de capsules 9 telles que décrites plus haut ne comportant qu'un coeur liquide et une enveloppe externe, sans phase intermédiaire.

Le système de distribution 4 est avantageusement réalisé en un matériau composite, par exemple par stéréolithographie.

En variante, le système 4 est réalisé en un matériau métallique, par exemple en acier inoxydable. En variante, le système 4 est réalisé en matériau polymère.

La première rampe 18, la deuxième rampe 20, et la troisième rampe 22 étant sensiblement identiques, seule la première rampe 18 sera décrite par la suite.

La première rampe de distribution 18 est représentée sur la figure 1. La première rampe 18 comprend un collecteur tubulaire 30 et un organe 32 d'amenée de fluide depuis l'extérieur du système 4 vers le collecteur tubulaire 30.

Le collecteur tubulaire 30 comprend une paroi périphérique 34 définissant un espace intérieur 36 dans lequel s'écoule le premier fluide 12. Le collecteur tubulaire 30 comprend en outre un premier orifice d'entrée 38, un deuxième orifice d'entrée 40, et une pluralité de conduits de sortie 42.

Le collecteur tubulaire 30 s'étend suivant une direction principale XX'. Il présente une section transversale avantageusement sensiblement circulaire et ayant un diamètre compris avantageusement entre 0,5 mm et 100 mm, notamment compris entre 2 mm et 25 mm, et en particulier égal à 10 mm.

Le collecteur tubulaire 30 présente une longueur suivant la direction principale XX' avantageusement comprise entre 10 mm et 2000 mm, notamment comprise entre 50 mm et 300 mm, et en particulier égale à 110 mm.

La paroi périphérique 34 du collecteur tubulaire 30 présente une partie supérieure 44 et une partie inférieure.

La partie supérieure 44 est de préférence crénelée et présente au moins un plan incliné. Plus précisément, la partie supérieure 44 présente une pluralité de portions en saillie 48 vers l'espace intérieur 36 du collecteur tubulaire 30, telles que des dents. Les portions en saillie 48 sont avantageusement régulièrement espacées le long de la partie supérieure 44 de la paroi périphérique 34 du collecteur tubulaire 30.

Les portions en saillie 48 permettent l'élimination des bulles d'air présentes dans le premier fluide 12. Plus précisément, les portions en saillie 48 permettent d'évacuer les bulles d'air comprises dans le premier fluide 12 en les guidant vers les conduits de sortie 42 du collecteur tubulaire 30.

Le premier orifice d'entrée 38 est disposé à une première extrémité 50 du collecteur tubulaire 30. Le deuxième orifice d'entrée 40 est disposé à une deuxième extrémité 52 du collecteur tubulaire 30 opposée à la première extrémité 50 suivant la direction principale XX'.

Chaque conduit de sortie 42 comprend à son extrémité aval au moins un orifice de sortie 53.

Chaque conduit de sortie 42 comprend en outre un premier tronçon 54 relié au collecteur tubulaire 30, un deuxième tronçon 56 relié à un des premiers raccordements 24, et un tronçon de liaison 58 des premier et deuxième tronçons 54, 56 entre eux.

Le premier tronçon 54 s'étend ici dans une direction transversale YY' à la direction principale XX' d'extension du collecteur tubulaire 30. Le deuxième tronçon 56 s'étend dans une direction sensiblement parallèle à la direction transversale YY' d'extension du premier tronçon 54. Le tronçon de liaison 58 s'étend dans une direction ZZ' transversale à la fois à la direction principale XX' d'extension du collecteur tubulaire 30 et à la direction transversale YY' d'extension des premier et deuxième tronçons 54, 56.

Le premier tronçon 54 débouche en amont vers le bas dans le collecteur tubulaire 30. Avantageusement, le premier tronçon 54 débouche au niveau du sommet de la partie supérieure 44.

Le premier tronçon 54 et le tronçon de liaison 58 du conduit de sortie 42 sont reliés entre eux par l'intermédiaire d'un premier coude 60. Le deuxième tronçon 56 et le tronçon de liaison 58 sont reliés entre eux par l'intermédiaire d'un second coude 62.

Chaque conduit de sortie 42 est relié en amont au collecteur tubulaire 30 et en aval à un des premiers raccordements 24.

Dans cet exemple, chaque conduit de sortie 42 présente deux branches 63, 65 opposées faisant saillie de part et d'autre du collecteur tubulaire 30. Chaque branche comporte un premier tronçon 54, un deuxième tronçon 56 débouchant par un orifice de sortie 53 et un tronçon de liaison 58.

Chaque conduit de sortie 42 présente une section transversale avantageusement sensiblement circulaire.

De préférence, le rapport entre la section transversale du collecteur tubulaire 30 et la section transversale de chaque conduit de sortie 42 est supérieur à 1. En particulier, ce rapport est supérieur à 5, et est par exemple sensiblement égal à 8..

Le volume de chaque conduit de sortie 42 est minimisé pour diminuer le volume mort.

Comme visible sur la figure 2, l'organe 32 d'amenée de fluide forme un raccord en T. Il comprend une première branche 64 de circulation de fluide, une seconde branche 66 de circulation de fluide et un passage 68 d'entrée de fluide commun aux première et deuxième branches de circulation 64, 66. Le sens de circulation du fluide dans la première branche 64 est opposé au sens de circulation du fluide dans la seconde branche 66.

Les première et seconde branches 64, 66 de circulation de fluide s'étendent dans le prolongement l'une de l'autre suivant la direction principale XX', sensiblement parallèlement au collecteur tubulaire 30. Elles présentent une section transversale sensiblement circulaire. Elles comportent respectivement un premier passage de sortie 70 et un deuxième passage de sortie 72.

Les premier et deuxième passages de sortie 70, 72 de l'organe d'amenée 32 sont raccordés respectivement aux premier et deuxième orifices d'entrée 38, 40 du collecteur tubulaire 30.

Le passage 68 d'entrée de fluide est disposé entre les premier et deuxième passages de sortie 70, 72 des première et deuxième branches 64, 66 de circulation de fluide.

Les premiers, deuxièmes et troisièmes raccordements 24, 26, 28 sont illustrés par la figure 3.

Les premiers, deuxièmes et troisièmes raccordements 24, 26, 28 étant sensiblement identiques, seuls les premiers raccordements 24 seront décrits par la suite.

Chaque premier raccordement 24 est destiné à raccorder un des orifices de sorties 53 de la première rampe 18 à un des dispositifs de production 6.

Chaque premier raccordement 24 forme avantageusement une perte de charge.

Suivant l'exemple représenté sur la figure 3, le premier raccordement 24 comporte une perte de charge régulière sur toute la longueur de la perte de charge, formée par exemple par un conduit hélicoïdal 74. La section transversale du conduit hélicoïdal 74 est avantageusement très inférieure à la section transversale du collecteur tubulaire 30.

En variante, le premier raccordement 24 comporte une perte de charge régulière, telle qu'un sillon dans une plaque (non représenté).

En variante, chaque premier raccordement 24 comporte une perte de charge régulière telle qu'un un tube rectiligne souple ou rigide (non représenté) présentant une section transversale très inférieure à la section transversale du collecteur tubulaire 30.

En variante, chaque premier raccordement 24 comporte une perte de charge dite « singulière », c'est-à-dire présentant un changement brutal de la section de passage du fluide, telle qu'une plaque perforée de trous présentant une section très faible par rapport à la section du collecteur tubulaire (non représentée).

De manière générale, la résistance hydrodynamique dans le premier raccordement 24 est très supérieure à la résistance hydrodynamique dans le collecteur tubulaire 30.

La résistance hydrodynamique se calcule grâce à la formule suivante :

$$R_h = \frac{8\mu L}{\pi R^4} \qquad (1)$$

où $R_h$ est la résistance hydrodynamique, $\mu$ est la viscosité dynamique (en Pa.s), L est la longueur du tube (en m) et R est le rayon du tube (en m).

On obtient à partir de la formule (1) le rapport R suivant :

$$\frac{L_R * R_C^4}{R_R^4 * L_C} \qquad (2)$$

où $L_R$ et $L_C$ sont respectivement la longueur du premier raccordement 24 et la longueur du collecteur tubulaire 30, et $R_R$ et $R_C$ sont respectivement la résistance hydrodynamique dans le premier raccordement 24 et la résistance hydrodynamique dans le collecteur tubulaire 30.

De manière générale, le rapport R entre la résistance hydrodynamique dans le premier raccordement 24 et la résistance hydrodynamique dans le collecteur tubulaire 30 est compris entre 1 et 50000, notamment compris entre 50 et 5000, et en particulier sensiblement égal à 500, quelque soit la viscosité du fluide s'écoulant à travers le système.

Grace à la perte de charge produite, il est possible de réguler l'écoulement de fluide en aval de la perte de charge et d'homogénéiser le fluide injecté dans le dispositif de production 6.

Un premier mode de réalisation du dispositif 6 de production d'éléments dispersés 8 est illustré par la figure 4.

Le dispositif de production 6 tel qu'illustré sur la figure 4 est particulièrement adapté à la production de capsules 9 telles que décrites plus haut.

Le dispositif de production 6 comprend un corps creux 75 délimitant un conduit interne 76 et un conduit externe 78. Le conduit interne 76 et le conduit externe 78 s'étendent le long d'un axe longitudinal AA', vertical sur la figure 4, et sont disposés de manière coaxiale le long de l'axe longitudinal AA'.

Le dispositif de production 6 comprend en outre une voie d'amenée externe 80 du deuxième fluide 16 et une voie d'amenée intermédiaire 82 de fluide intermédiaire 11. La voie d'amenée externe 80 et la voie d'amenée intermédiaire 82 sont reliées en aval au conduit externe 78.

Le premier fluide 12 s'écoule à travers le conduit interne 76, et le deuxième fluide 16 et le fluide intermédiaire 11 s'écoulent respectivement depuis la voie d'amenée externe 80 et depuis la voie d'amenée intermédiaire 82 vers le conduit externe 78, de façon à former les capsules 9.

En outre, le dispositif de production 6 comprend un canal de liaison externe 84 et un canal de liaison intermédiaire 86. Le canal de liaison externe 84 relie la voie d'amenée externe 80 au conduit externe 78. Le canal de liaison intermédiaire 86 relie la voie d'amenée intermédiaire 82 au conduit externe 78.

En variante, le dispositif de production 6 ne comprend pas de voie d'amenée intermédiaire 82 ni de canal de liaison intermédiaire 86. Une telle variante est notamment particulièrement adaptée pour la formation de capsules 9 telles que décrites plus haut ne comportant qu'un coeur liquide et une enveloppe externe, sans phase intermédiaire.

Le corps creux 75 est avantageusement réalisé en matériau composite ou polymère. Ce matériau est par exemple une résine thermodurcissable de type époxy. Des exemples de résines sont commercialisés par la société 3D Systems sous les références «accura extreme » ou «accura 60 »..

Le conduit interne 76 et le conduit externe 78 débouchent vers le bas par une ouverture 88 de formation des capsules 9.

Le conduit interne 76 est formé par un tube interne 90. Le tube interne 90 délimite intérieurement un volume intérieur 92 de circulation du premier fluide 12 raccordé en amont à un des premiers raccordements 24 tels que décrits plus haut.

Le volume intérieur 92 du tube interne 90 débouche en amont par un accès amont 93 et en aval par un orifice aval 94 de distribution de premier fluide 12. L'orifice aval 94 est situé sensiblement au même niveau que l'ouverture 88 de formation des capsules 9.

Le conduit externe 78 est formé par un tube externe 96. Le tube externe 96 délimite une chambre 98 de circulation du deuxième fluide 16 et du fluide intermédiaire 11 raccordée en amont aux organes de liaison externe et intermédiaire 84, 86.

La chambre 98 du tube externe 96 débouche par un orifice aval externe 100 de distribution du deuxième fluide 16 et du fluide intermédiaire 11 située sensiblement au même niveau que l'ouverture 88 de formation des éléments dispersés 8.

De préférence, le tube externe 96 et/ou le tube interne 90 comprend une région 97 de pré formation des capsules 9.

La région 97 présente une extrémité aval 99. La région 97 présente de préférence une section transversale allant en diminuant depuis l'amont vers l'aval. En variante (non représentée), la région 97 présente une section transversale allant en augmentant depuis l'amont vers l'aval.

Suivant la figure 4, seul le tube externe 96 comprend une région 97 présentant une section transversale allant en diminuant depuis l'amont vers l'aval.

L'extrémité aval 99 de la région 97 permet de prédéterminer la taille des capsules 9 produites. Une région 97 présentant une section transversale allant en diminuant depuis l'amont vers l'aval permet de diminuer la taille des capsules 9. Une région 97 présentant une section transversale allant en augmentant depuis l'amont vers l'aval permet d'augmenter la taille des capsules 9.

La voie d'amenée externe 80 est formée par un canal externe 102 présentant une forme sensiblement de révolution autour de l'axe longitudinal AA'. Cette forme est de préférence torique.

La voie d'amenée externe 80 est reliée en amont à un des deuxièmes raccordements 26 et en aval au canal de liaison externe 84. Elle comprend une région supérieure 104 et une région inférieure 106.

La voie d'amenée intermédiaire 82 est formée par un canal intermédiaire 108 présentant une forme sensiblement de révolution autour de l'axe longitudinal AA'. Cette forme est de préférence torique.

La voie d'amenée intermédiaire 82 est reliée en amont à un des troisièmes raccordements 28. Elle comprend

une région supérieure 110 et une région inférieure 112.

Les canaux de liaison externe et intermédiaire 84, 86 forment avantageusement une perte de charge. Ils présentent par exemple une forme coudée avec un tronçon amont 113 s'écartant axialement de l'ouverture aval 100 et un tronçon aval 115 sensiblement parallèle à l'axe A-A' vers l'ouverture 88.

En outre, le canal de liaison externe 84 présente une section transversale inférieure à la section transversale de la voie d'amenée externe 80.

De même, le canal de liaison intermédiaire 86 présente une section transversale inférieure à la section transversale de la voie d'amenée intermédiaire 82.

Ces pertes de charge permettent de réguler l'écoulement de fluide et d'homogénéiser le débit de fluide dans le dispositif de production 6.

Le canal de liaison externe 84 est avantageusement relié à la région supérieure 104 de la voie d'amenée externe 80.

De même, le canal de liaison intermédiaire 86 est avantageusement relié à la région supérieure 110 de la voie d'amenée intermédiaire 82.

De cette façon, les bulles d'air présentes dans le deuxième fluide 16 peuvent être évacuées par gravité vers le canal de liaison externe 84 puis vers le conduit externe 78 et vers l'extérieur du dispositif de production 6.

De même, les bulles d'air présentes dans le fluide intermédiaire 11 peuvent être évacuées par gravité vers le canal de liaison intermédiaire 86 puis vers le conduit externe 78 et vers l'extérieur du dispositif de production 6.

Selon l'invention, le dispositif de production 6 comporte en outre au moins un tube métallique 114 s'étendant suivant l'axe longitudinal AA'.

Dans l'exemple représenté sur la figure 4, le dispositif de production 6 comprend un tube métallique 114 situé dans le prolongement aval du conduit externe 78, et un tube métallique 114 situé dans le prolongement aval du conduit interne 76.

En variante, le tube métallique 114 est disposé uniquement dans le prolongement aval du conduit interne 76 ou uniquement dans le prolongement aval du conduit externe 78.

Le tube métallique 114 présente une section transversale avantageusement circulaire et sensiblement identique à la section transversale de l'extrémité aval de la région 97.

Le tube métallique est rapporté sur le corps 75 en matière polymère.

Ainsi, les éléments dispersés 8 formés en sortie du dispositif de production 6 présentent une taille reproductible et prédéterminée en fonction du diamètre du tube métallique 114 choisi.

Le corps creux 75 est avantageusement fabriqué par stéréolithographie. Une fois le corps creux 75 fabriqué, les tubes métalliques 114 sont rapportés sur le corps 75.

Préférentiellement, les tubes métalliques 114 sont disposés dans le prolongement aval des conduits 76 et/ou 78, dès que la section des conduits 76 et/ou 78 est constante.

Le fonctionnement de l'ensemble 2 de production d'éléments dispersés 8 comprenant le dispositif 6 de production d'élément dispersés 8 selon l'invention va maintenant être décrit, en regard des figures 1 à 4.

Initialement, un ensemble de production 2 d'éléments dispersés 8 selon l'invention est fourni. Les éléments dispersés 8 sont par exemple formés de capsules 9 telles que décrites plus haut.

Le premier fluide 12 est introduit dans l'organe d'amenée 32 de premier fluide 12 à travers le passage d'amenée 68 du premier fluide 12, puis s'écoule à travers les première et deuxième branches 64, 66 de l'organe d'amenée 32 du premier fluide 12.

Dans le même temps, le fluide externe et le fluide intermédiaire 11 sont introduits respectivement dans l'organe d'amenée 32 du deuxième fluide 16 et dans l'organe d'amenée 32 du fluide intermédiaire 11.

Ensuite, le premier fluide 12, le fluide intermédiaire 11 et le deuxième fluide 16 s'écoulent dans l'espace intérieur 36 du collecteur tubulaire 30 de chaque rampe 18, 20, 22, depuis les orifices d'entrée 38, 40 vers la pluralité d'orifices de sortie 53. Lors de cette étape, les bulles d'air présentes dans les fluides sont guidées vers les orifices de sortie 53 par l'intermédiaire des portions en saillie 48 situées sur la partie supérieure 44 de la paroi périphérique 34 de chaque collecteur tubulaire 30.

Le premier fluide 12, le fluide intermédiaire 11 et le deuxième fluide 16 s'écoulent ensuite à travers chaque orifice de sortie 53 respectivement vers les premiers, les deuxièmes et les troisièmes raccordements 24, 26, 28, où une perte de charge se produit, permettant une régulation du débit en aval, quel que soit la position du dispositif 6.

Ensuite, le premier fluide 12 s'écoule dans le volume intérieur 92 du conduit interne 76 à travers l'accès amont 93.

Le deuxième fluide 16 s'écoule dans la voie d'amenée externe 80, où il se répartit uniformément autour de l'axe AA', dans le canal de liaison externe 84 puis dans la chambre 98 de circulation du conduit externe 78.

Le fluide intermédiaire 11 s'écoule dans la voie d'amenée intermédiaire 82, où il se répartit uniformément autour de l'axe AA,' dans le canal de liaison intermédiaire 86, puis dans la chambre 98 de circulation du conduit externe 78.

Lors de cette étape, les bulles d'air présentes dans le fluide externe 16 et le fluide intermédiaire 11 sont évacuées par gravité vers les régions supérieures 104, 110 des voies d'amenée externe et intermédiaire 80, 82, puis vers les

canaux de liaison externe et intermédiaire 84, 86, vers le conduit externe 78 et enfin vers l'ouverture aval 88 du dispositif de production 6.

Ensuite, le premier fluide 12, le fluide intermédiaire 11 et le deuxième fluide 16 s'écoulent dans les tubes métalliques 114 situés dans le prolongement aval du conduit externe 78 et du conduit interne 76 jusqu'à l'ouverture de formation 88.

Le premier fluide 12 est alors injecté dans le fluide intermédiaire 11 et dans le deuxième fluide 16 au niveau de l'ouverture aval 88 du dispositif de production 6 pour former des corps liquides complexes.

Les dimensions des corps liquides complexes successivement formés sont reproductibles d'un corps liquide à un autre, et d'un dispositif 6 à un autre, compte tenu des dimensions très précises des tubes métalliques 114.

Les corps liquides complexes tombent dans un volume d'air vers un bain de gélifiant. Une fois tombés dans le bain de gélifiant, les corps complexes forment les capsules 9.

L'ensemble de production 2 qui vient d'être décrit permet de produire des capsules 9 ayant une taille prédéterminée, grâce à la présence des tubes métalliques 114 présentant un diamètre prédéterminé. Les dimensions bien définies des tubes métalliques 114 compensent les éventuelles variations de cote du corps 75 en matériau polymère. Il est ainsi possible, avec l'ensemble de production 2 selon l'invention, de produire des capsules 9 de manière très reproductible au cours du temps, et d'un dispositif 6 à l'autre.

L'ensemble de production 2 selon l'invention permet en outre, grâce aux rampes de distribution 18, 20, 22, de produire des capsules 9 en quantité industrielle, et est par ailleurs facile à fabriquer et fiable d'utilisation.

De plus, les pertes de charges présentes dans l'ensemble de production 2 permettent de réguler et d'homogénéiser le débit de fluide s'écoulant à l'intérieur de l'ensemble de production 2.

Une variante 200 d'un dispositif de production selon l'invention est représentée sur la figure 5.

A la différence du dispositif de production 6, la voie d'amenée intermédiaire 82 du dispositif de production 200 est reliée au conduit interne 76. Le fluide intermédiaire 11 s'écoule donc depuis la voie d'amenée intermédiaire 82 dans le conduit interne 76.

Par ailleurs, comme illustré par la figure 5, le tube métallique 114 présente une section transversale sensiblement inférieure à la section transversale du conduit interne 76. Le tube métallique 114 est disposé dans le volume intérieur 92 du conduit interne 76 et fait saillie axialement au niveau de la liaison entre la voie d'amenée intermédiaire 82 et le conduit interne 76.

Ainsi, le fluide intermédiaire 11 est propre à s'écouler depuis la voie d'amenée intermédiaire 82 vers l'intérieur du tube métallique 114 par débordement après être remonté le long du tube métallique 114.

Le dispositif 200 tel qu'illustré sur la figure 5 est particulièrement adapté à la formation d'une dispersion de gouttes 17 telle que décrite plus haut.

En fonctionnement, le premier fluide 12 s'écoule depuis à travers l'accès amont 93 dans le volume intérieur 92 du conduit interne 76.

Le fluide intermédiaire 11 remonte le long du tube métallique 114 depuis la voie d'amenée intermédiaire 82 puis entre par débordement à l'intérieur du tube métallique 114 disposé dans le volume intérieur 92 du conduit interne 76.

Le deuxième fluide 16 s'écoule depuis la voie d'amenée externe 80 dans le conduit externe 78.

Ensuite, le premier fluide 12 et le fluide intermédiaire 11 sont injectés, au niveau de l'extrémité aval du tube métallique 114, dans le deuxième fluide 16 s'écoulant dans le conduit externe 78 pour former la dispersion de gouttes 17. La dispersion de gouttes 17 ainsi formée s'écoule ensuite vers l'extérieur du dispositif de production 200.

Des exemples de compositions de chaque fluide formant les gouttes 17 sont décrits dans les Tableaux ci-dessous.

<u>Exemple 1</u>

Dans cet exemple, le premier polymère précurseur de coacervat est de type cationique et lipophile (amodiméticone), et le deuxième polymère précurseur de coacervat de type anionique et hydrophile (acide polyacrylique).

Le premier polymère est contenu dans le fluide interne huileux. Le deuxième polymère est contenu dans le fluide externe aqueux.

Un coacervat est formé au niveau de l'interface entre l'acide polyacrylique contenu dans le fluide externe et un aminosilicone (amodiméticone) contenu dans le fluide interne, après formation de gouttes 17 dans le fluide externe.

La rencontre de ces deux polymères provoque la coacervation et la rigidification de la membrane autour des gouttes 17.

Les débits suivants sont appliqués :

- Fluide externe : 80 mL/heure
- Fluide interne : 15 mL/heure
- Fluide intermédiaire : 5 mL/heure.

La composition de chaque fluide est décrite dans le tableau ci-dessous.

| Phase | Nom du produit | % massique | Fonction |
|---|---|---|---|
| Fluide interne | PDMS 6 sCt | 99,5 % | Solvant |
| | Amino-silicone | 0,5 % | Agent de coacervation |
| Fluide externe | Eau | 99,5% | Solvant |
| | Acide polyacrylique | 0,5% | Agent de coacervation |
| Fluide intermédiaire | PDMS 6 sCt | 100 % | Solvant |
| PDMS 6 cSt = polydiméthylsiloxane (diméthicone) de viscosité 6 cSt | | | |

Les gouttes 17 présentent un diamètre d'environ 1 millimètre avec une membrane en coacervat.
Dans une variante, la dispersion de gouttes 17 contient un agent parfumant.
Parmi les agents parfumants, on peut notamment citer tout type de parfum ou de fragrance, ces termes étant utilisés ici de façon indifférente. Ces parfums ou fragrances sont bien connus de l'homme du métier et incluent notamment ceux mentionnés, par exemple, dans S. Arctander, Perfume and Flavor Chemicals (Montclair, N.J., 1969), S. Arctander, Perfume and Flavor Materials of Natural Origin (Elizabeth, N.J., 1960) et dans "Flavor and Fragrance Materials", 1991 (Allured Publishing Co. Wheaton, III. USA).
Les parfums utilisés peuvent comprendre les produits naturels comme les extraits, les huiles essentielles, les absolus, les résinoïdes, les résines, les concrètes, etc... ainsi que les substances basiques de synthèse comme les hydrocarbures, les alcools, les aldéhydes, les cétones, les éthers, les acides, les esters, les acétals, les cétals, les nitriles, etc..., y compris les composés, saturés et insaturés, les composés aliphatiques, alicycliques et hétérocycliques.
Avantageusement, la dispersion de gouttes 17 est dépourvue d'alcool.
Dans le cadre de la présente description, on entend par « alcool » un composé hydrocarboné, linéaire ou ramifié, comprenant de 1 à 4 atomes de carbone, dans lequel au moins un atome d'hydrogène est remplacé par une fonction hydroxyle. Un tel alcool est typiquement l'éthanol, l'isopropanol, le n-butanol ou tout autre alcool usuel dans le domaine de la cosmétique.
Avantageusement, la première phase et la deuxième phase comprennent une quantité réduite de tensio-actif, généralement tolérée dans le cadre d'une application cosmétique. De préférence, la dispersion de gouttes 17 est totalement exempte de tensio-actif.

<u>Exemple 2</u>

Dans cet exemple, la dispersion de gouttes 17 contient un agent parfumant. Un coacervat est formé au niveau de l'interface entre l'acide polyacrylique contenu dans le fluide externe, et un aminosilicone contenu dans le fluide interne après formation des gouttes 17, et après mélange entre le fluide intermédiaire de la pellicule et le fluide interne.
Les débits suivants sont appliqués :

- Fluide interne : 15 mL/heure
- Fluide externe : 80 mL/heure
- Fluide intermédiaire : 5 mL/heure.

La composition de chaque est décrite dans le tableau ci-dessous :

| Phase | Nom du produit | % massique | Fonction |
|---|---|---|---|
| Fluide interne | Isononyl Isononoate | 33 % | Solvant |
| | Parfum | 66% | |
| | Amino-silicone | 1 % | Agent de coacervation |
| Fluide externe | Eau | 99,5% | Solvant |
| | Acide polyacrylique | 0,5% | Agent de coacervation |
| Fluide intermédiaire | Isononyl Isononoate | 100 % | Solvant |

On obtient ainsi une dispersion de gouttes 17 de première phase huileuse contenant un agent parfumant, dispersées dans une deuxième phase aqueuse. Les gouttes 17 sont monodispersées, présentent un diamètre de 1 millimètre et une écorce en coacervat.

Comme illustré par les figures 4 et 5, le tube métallique 114 présente une section transversale constante sur toute la longueur du tube métallique 114.

## Revendications

1. Dispositif (6, 200) de production d'éléments dispersés (8), chaque élément dispersé comprenant un coeur (10) comprenant au moins un premier fluide (12), et une enveloppe (14) propre à retenir le coeur, l'enveloppe (14) étant obtenue à partir d'un deuxième fluide (16), le dispositif (6) comprenant un corps creux (75), le corps creux (75) définissant :

   - un conduit interne (76) de distribution du premier fluide (12), le conduit interne (76) définissant un volume intérieur (92) ;
   - un conduit externe (78) de distribution du deuxième fluide (16), le conduit interne (76) et le conduit externe (78) s'étendant coaxialement le long d'un axe longitudinal (AA') ;

   le dispositif (6) comprenant au moins un tube métallique (114) s'étendant suivant l'axe longitudinal (AA') et étant disposé dans le volume intérieur (92) du conduit interne (76) et/ou dans le prolongement aval du conduit interne (76) et/ou du conduit externe (78),
   le conduit externe (78) étant relié en amont à une voie d'amenée externe (80) du deuxième fluide (16), **caractérisé en ce que** la voie d'amenée externe (80) présente une forme sensiblement de révolution autour de l'axe longitudinal (AA'), la voie d'amenée externe (80) étant reliée au conduit externe (78) au moyen d'un canal de liaison externe (84) formant une perte de charge.

2. Dispositif (6, 200) selon la revendication 1, **caractérisé en ce que** la voie d'amenée externe (80) présente une région supérieure (104) et une région inférieure (106), le canal de liaison externe (84) étant relié à la région supérieure (104) de la voie d'amenée externe (80).

3. Dispositif (6) selon la revendication 1 ou 2, **caractérisé en ce que** le tube métallique (114) est disposé dans le prolongement aval du conduit interne (76) et/ou du conduit externe (78), le conduit interne (76) et/ou le conduit externe (78) comprenant une région de pré-formation (97) présentant une extrémité aval (99) et avantageusement une section transversale allant en augmentant ou en diminuant depuis l'amont vers l'aval, le tube métallique (114) présentant une section transversale sensiblement identique à la section transversale de l'extrémité aval (99) de la région (97).

4. Dispositif (6, 200) selon l'une quelconque des revendications précédentes, **caractérisé en ce que** le conduit externe (78) et/ou le conduit interne (76) est en outre relié en amont à une voie d'amenée intermédiaire (82) d'un fluide intermédiaire (11) destiné à former une phase intermédiaire en contact avec le deuxième fluide (16).

5. Dispositif (200) selon la revendication 4, **caractérisé en ce que** le tube métallique (114) est disposé dans le volume intérieur (92) du conduit interne (76) pour permettre l'écoulement du fluide intermédiaire (11) depuis la voie d'amenée intermédiaire (82) dans le tube métallique (114) par débordement.

6. Dispositif (6, 200) selon l'une quelconque des revendications précédentes, **caractérisé en ce que** le corps creux (75) est réalisé en un matériau composite ou polymère, le ou chaque tube métallique (114) étant rapporté sur le corps creux (75).

7. Ensemble (2) de production d'éléments dispersés (8) comportant :

   - une pluralité de dispositifs (6, 200) de production d'éléments dispersés (8) selon l'une quelconque des revendications précédentes ;
   - un système (4) de distribution de fluide, le système de distribution (4) comprenant une première rampe de distribution (18) du premier fluide (12) et une deuxième rampe de distribution (20) du deuxième fluide (16), chaque rampe de distribution (18, 20) comprenant un collecteur tubulaire (30) comportant au moins un orifice d'entrée (38, 40) et une pluralité d'orifices de sorties (53), le système comprenant en outre des premiers et

deuxièmes raccordements (24, 26) formant chacun une perte de charge, chaque orifice de sortie (53) étant relié en aval à un des raccordements (24, 26), chaque premier raccordement (24) raccordant la première rampe (18) au conduit interne (76) d'un des dispositifs de production (6, 200), et chaque deuxième raccordement (26) raccordant la deuxième rampe (20) au conduit externe (78) d'un des dispositifs de production (6, 200).

**8.** Ensemble (2) selon la revendication 7, **caractérisé en ce que** chaque dispositif (6, 200) comprend en outre une voie d'amenée intermédiaire (82) d'un fluide intermédiaire (11) destiné à former une phase intermédiaire en contact avec le deuxième fluide (16), la voie d'amenée intermédiaire (82) étant reliée en aval au conduit externe (78) et/ou au conduit interne (76),
et **en ce que** le système de distribution (4) comprend en outre une troisième rampe (22) de distribution du fluide intermédiaire (11), la troisième rampe de distribution (22) comprenant un collecteur tubulaire (30) comportant au moins un orifice d'entrée (38, 40) et une pluralité d'orifices de sorties (53), le système de distribution (4) comprenant en outre des troisièmes raccordements (28) formant chacun une perte de charge, chaque orifice de sortie (53) de la troisième rampe de distribution (22) étant relié en aval à un des troisièmes raccordements (28), chaque troisième raccordement (28) raccordant la troisième rampe de distribution (22) à la voie d'amenée intermédiaire (82) d'un des dispositifs (6, 200).

**9.** Ensemble (2) selon la revendication 7 ou 8, **caractérisé en ce que** chaque collecteur tubulaire (30) comprend une paroi périphérique (34), la paroi périphérique (34) comprenant une partie supérieure (44) crénelée présentant au moins un plan incliné.

**10.** Ensemble (2) selon l'une quelconque des revendications 7 à 9, **caractérisé en ce que** les raccordements (24, 26, 28) formant une perte de charge comprennent un conduit hélicoïdal (74), une plaque perforée de trous, un sillon formé dans une plaque, ou un tube rectiligne souple ou rigide.

**11.** Ensemble (2) selon l'une quelconque des revendications 7 à 10, **caractérisé en ce que** chaque collecteur tubulaire (30) comprend un premier orifice d'entrée (38) et un deuxième orifice d'entrée (40) opposé au premier orifice d'entrée (38), chaque rampe de distribution (18, 20, 22) comprenant un organe (32) d'amenée de fluide comportant deux branches (64, 66) opposées raccordées respectivement au premier et au deuxième orifices d'entrée (38, 40).

**12.** Procédé de production d'éléments dispersés (8), chaque élément dispersé comprenant un coeur (10) comprenant au moins un premier fluide (12) et une enveloppe (14) propre à retenir le coeur, l'enveloppe (14) étant formée à partir d'un deuxième fluide (16), le procédé comprenant les étapes suivantes :

- fourniture d'un ensemble (2) selon l'une quelconque des revendications 7 à 11 ;
- amenée du premier fluide (12) dans la première rampe de distribution (18) et amenée du deuxième fluide (16) dans la deuxième rampe de distribution (20) ;
- écoulement du premier fluide (12) dans le conduit interne (76) et écoulement du deuxième fluide (16) dans le conduit externe (78) à travers la voie d'amenée externe (80) ;
- injection du premier fluide (12) dans le deuxième fluide (16) pour former les éléments dispersés (8) ;
- écoulement des éléments dispersés (8) vers l'extérieur de l'ensemble (2).

**13.** Procédé selon la revendication 12, **caractérisé en ce qu'**il comprend en outre les étapes suivantes :

- amenée d'un fluide intermédiaire (11) dans une troisième rampe de distribution (22) ;
- écoulement du fluide intermédiaire (11) dans le conduit externe (78) à travers une voie d'amenée intermédiaire (82) ;
- injection du fluide intermédiaire (11) dans le deuxième fluide (16).

**Patentansprüche**

**1.** Vorrichtung (6, 200) zur Herstellung von dispergierten Elementen (8), wobei jedes dispergierte Element einen Kern (10) mit mindestens einem ersten Fluid (12) und eine Hülle (14), die den Kern halten kann, umfasst, wobei die Hülle (14) aus einem zweiten Fluid (16) erhalten wird, wobei die Vorrichtung (6) einen hohlen Körper (75) umfasst, wobei der hohle Körper (75) Folgendes definiert:

- eine innere Leitung (76) zum Verteilen des ersten Fluids (12), wobei die innere Leitung (76) ein Innenvolumen

(92) definiert;
- eine äußere Leitung (78) zum Verteilen des zweiten Fluids (16), wobei sich die innere Leitung (76) und die äußere Leitung (78) koaxial entlang einer Längsachse (AA') erstrecken;

wobei die Vorrichtung (6) mindestens ein Metallrohr (114) umfasst, das sich entlang der Längsachse (AA') erstreckt und im Innenvolumen (92) der inneren Leitung (76) und/oder in der stromabseitigen Verlängerung der inneren Leitung (76) und/oder der äußeren Leitung (78) angeordnet ist,
wobei die äußere Leitung (78) stromaufwärts mit einem äußeren Zuführungsweg (80) des zweiten Fluids (16) verbunden ist, **dadurch gekennzeichnet, dass** der äußere Zuführungsweg (80) im Wesentlichen eine rotationssymmetrische Form um die Längsachse (AA') besitzt, wobei der äußere Zuführungsweg (80) mit der äußeren Leitung (78) mittels eines äußeren Verbindungskanals (84) verbunden ist, der einen Druckverlust bildet.

**2.** Vorrichtung (6, 200) nach Anspruch 1, **dadurch gekennzeichnet, dass** der äußere Zuführungsweg (80) einen oberen Bereich (104) und einen unteren Bereich (106) aufweist, wobei der äußere Verbindungskanal (84) mit dem oberen Bereich (104) des äußeren Zuführungsweges (80) verbunden ist.

**3.** Vorrichtung (6) nach Anspruch 1 oder 2, **dadurch gekennzeichnet, dass** das Metallrohr (114) in der stromabseitigen Verlängerung der inneren Leitung (76) und/oder der äußeren Leitung (78) angeordnet ist, wobei die innere Leitung (76) und/oder die äußere Leitung (78) einen Vorbildungsbereich (97) umfassen, der ein stromabseitiges Ende (99) und vorteilhafterweise einen Querschnitt aufweist, der unter Vergrößerung oder Verkleinerung von stromaufseitig nach stromabseitig verläuft, wobei das Metallrohr (114) einen Querschnitt aufweist, der zum Querschnitt des stromabseitigen Endes (99) des Bereichs (97) im Wesentlichen identisch ist.

**4.** Vorrichtung (6, 200) nach einem der vorangehenden Ansprüche, **dadurch gekennzeichnet, dass** die äußere Leitung (78) und/oder die innere Leitung (76) außerdem stromaufwärts mit einem Zwischenzuführungsweg (82) eines Zwischenfluids (11) verbunden sind, das eine Zwischenphase in Kontakt mit dem zweiten Fluid (16) bilden soll.

**5.** Vorrichtung (200) nach Anspruch 4, **dadurch gekennzeichnet, dass** das Metallrohr (114) im Innenvolumen (92) der inneren Leitung (76) angeordnet ist, um die Strömung des Zwischenfluids (11) vom Zwischenzuführungsweg (82) in das Metallrohr (114) durch Überlaufen zu ermöglichen.

**6.** Vorrichtung (6, 200) nach einem der vorangehenden Ansprüche, **dadurch gekennzeichnet, dass** der hohle Körper (75) aus einem Verbund- oder Polymermaterial hergestellt ist, wobei das oder jedes Metallrohr (114) an den hohlen Körper (75) angefügt ist.

**7.** Einheit (2) zur Herstellung von dispergierten Elementen (8), die Folgendes umfasst:

- mehrere Vorrichtungen (6, 200) zur Herstellung von dispergierten Elementen (8) nach einem der vorangehenden Ansprüche;
- ein System (4) zum Verteilen von Fluid, wobei das Verteilungssystem (4) eine erste Rampe (18) zum Verteilen des ersten Fluids (12) und eine zweite Rampe (20) zum Verteilen des zweiten Fluids (16) umfasst, wobei jede Verteilungsrampe (18, 20) einen röhrenförmigen Verteiler (30) mit mindestens einer Eingangsöffnung (38, 40) und mehreren Ausgangsöffnungen (53) umfasst, wobei das System außerdem eine erste und eine zweite Verbindung (24, 26) umfasst, die jeweils einen Druckverlust bilden, wobei jede Ausgangsöffnung (53) stromabwärts mit einer der Verbindungen (24, 26) verbunden ist, wobei jede erste Verbindung (24) die erste Rampe (18) mit der inneren Leitung (76) von einer der Herstellungsvorrichtungen (6, 200) verbindet und jede zweite Verbindung (26) die zweite Rampe (20) mit der äußeren Leitung (78) von einer der Herstellungsvorrichtungen (6, 200) verbindet.

**8.** Einheit (2) nach Anspruch 7, **dadurch gekennzeichnet, dass** jede Vorrichtung (6, 200) außerdem einen Zwischenzuführungsweg (82) eines Zwischenfluids (11) umfasst, das eine Zwischenphase in Kontakt mit dem zweiten Fluid (16) bilden soll, wobei der Zwischenzuführungsweg (82) stromabwärts mit der äußeren Leitung (78) und/oder der inneren Leitung (76) verbunden ist,
und dass das Verteilungssystem (4) außerdem eine dritte Rampe (22) zum Verteilen des Zwischenfluids (11) umfasst, wobei die dritte Verteilungsrampe (22) einen röhrenförmigen Verteiler (30) mit mindestens einer Eingangsöffnung (38, 40) und mehreren Ausgangsöffnungen (53) umfasst, wobei das Verteilungssystem (4) außerdem dritte Verbindungen (28) umfasst, die jeweils einen Druckverlust bilden, wobei jede Ausgangsöffnung (53) der dritten Verteilungsrampe (22) stromabwärts mit einer der dritten Verbindungen (28) verbunden ist, wobei jede dritte Verbindung

(28) die dritte Verteilungsrampe (22) mit dem Zwischenzuführungsweg (82) von einer der Vorrichtungen (6, 200) verbindet.

**9.** Einheit (2) nach Anspruch 7 oder 8, **dadurch gekennzeichnet, dass** jeder röhrenförmige Verteiler (30) eine Umfangswand (34) umfasst, wobei die Umfangswand (34) einen gekerbten oberen Abschnitt (44) umfasst, der mindestens eine schiefe Ebene aufweist.

**10.** Einheit (2) nach einem der Ansprüche 7 bis 9, **dadurch gekennzeichnet, dass** die Verbindungen (24, 26, 28), die einen Druckverlust bilden, eine schraubenförmige Leitung (74), eine mit Löchern durchbohrte Platte, eine in der Platte ausgebildete Rille oder ein biegsames oder starres geradliniges Rohr umfassen.

**11.** Einheit (2) nach einem der Ansprüche 7 bis 10, **dadurch gekennzeichnet, dass** jeder röhrenförmige Verteiler (30) eine erste Eingangsöffnung (38) und eine zweite Eingangsöffnung (40), die der ersten Eingangsöffnung (38) gegenüberliegt, umfasst, wobei jede Verteilungsrampe (18, 20, 22) eine Einrichtung (32) zum Zuführen von Fluid mit zwei gegenüberliegenden Zweigen (64, 66) umfasst, die mit der ersten bzw. der zweiten Eingangsöffnung (38, 40) verbunden sind.

**12.** Verfahren zur Herstellung von dispergierten Elementen (8), wobei jedes dispergierte Element einen Kern (10) mit mindestens einem ersten Fluid (12) und eine Hülle (14), die den Kern halten kann, umfasst, wobei die Hülle (14) aus einem zweiten Fluid (16) gebildet ist, wobei das Verfahren die folgenden Schritte umfasst:

- Bereitstellen einer Einheit (2) nach einem der Ansprüche 7 bis 11;
- Zuführen des ersten Fluids (12) in die erste Verteilungsrampe (18) und Zuführen des zweiten Fluids (16) in die zweite Verteilungsrampe (20);
- Bewirken einer Strömung des ersten Fluids (12) in die innere Leitung (76) und Strömung des zweiten Fluids (16) in die äußere Leitung (78) über den äußeren Zuführungsweg (80);
- Einleiten des ersten Fluids (12) in das zweite Fluid (16), um die dispergierten Elemente (8) zu bilden;
- Bewirken einer Strömung der dispergierten Elemente (8) zur Außenseite der Einheit (2).

**13.** Verfahren nach Anspruch 12, **dadurch gekennzeichnet, dass** es außerdem die folgenden Schritte umfasst:

- Zuführen eines Zwischenfluids (11) in eine dritte Verteilungsrampe (22);
- Bewirken einer Strömung des Zwischenfluids (11) in die äußere Leitung (78) über einen Zwischenzuführungsweg (82);
- Einleiten des Zwischenfluids (11) in das zweite Fluid (16).

## Claims

**1.** A device (6, 200) for producing dispersed elements (8), each dispersed element comprising a core (10) comprising at least one first fluid (12), and a shell (14) able to retain the core, the shell (14) being obtained from a second fluid (16), the device (6) comprising a hollow body (75), the hollow body (75) defining:

- an internal conduit (76) for distributing the first fluid (12), the internal conduit (76) defining an inner volume (92);
- an external conduit (78) for distributing the second fluid (16), the internal conduit (76) and the external conduit (78) extending coaxially along a longitudinal axis (AA');

the device (6) comprises at least one metal tube (114) extending along the longitudinal axis (AA') and being positioned in the inner volume (92) of the internal conduit (76) and/or in the downstream extension of the internal conduit (76) and/or of the external conduit (78), the external conduit (78) being connected upstream to an external supply route (80) for the second fluid (16), **characterized in that** the external supply route (80) has a substantially revolution shape around the longitudinal axis (AA'), the external supply route (80) being connected to the external conduit (78) by means of an external connection channel (84) forming a pressure drop.

**2.** The device (6, 200) according to claim 1, **characterized in that** the external supply route (80) has an upper region (104) and a lower region (106), the external connection channel (84) being connected to the upper region (104) of the external supply route (80).

**3.** The device (6) according to claim 1 or 2, **characterized in that** the metal tube (114) is positioned in the downstream extension of the internal conduit (76) and/or of the external conduit (78), the internal conduit (76) and/or the external conduit (78) comprising a pre-formation region (97) having a downstream end (99) and advantageously a cross-section which increases or decreases from the upstream side to the downstream side, the metal tube (114) having a cross-section substantially identical with the cross-section of the downstream end (99) of the region (97).

**4.** The device (6, 200) according to any one of the preceding claims, **characterized in that** the external conduit (78) and/or the internal conduit (76) is further connected upstream to an intermediate supply route (82) for an intermediate fluid (11) intended to form an intermediate phase in contact with the second fluid (16).

**5.** The device (200) according to claim 4, **characterized in that** the metal tube (114) is positioned in the inner volume (92) of the internal conduit (76) for allowing the intermediate fluid (11) to flow from the intermediate supply route (82) into the metal tube (114) by overflowing.

**6.** The device (6, 200) according to any one of the preceding claims, **characterized in that** the hollow body (75) is made in a composite or polymeric material, said or each metal tube (114) being added onto the hollow body (75).

**7.** An assembly (2) for producing dispersed elements (8) comprising:

- a plurality of devices (6, 200) for producing dispersed elements (8) according to any one of the preceding claims;
- a fluid distribution system (4), the distribution system (4) comprising a first ramp (18) for distributing the first fluid (12) and a second ramp (20) for distributing the second fluid (16), each distribution ramp (18, 20) comprising a tubular manifold (30) comprising at least one inlet orifice (38, 40) and a plurality of outlet orifices (53), the system further comprising first and second connections (24, 26) each forming a pressure drop, each outlet orifice (53) being connected downstream to one of the connections (24, 26), each first connection (24) connecting the first ramp (18) to the internal conduit (76) of one of the production devices (6, 200), and each second connection (26) connecting the second ramp (20) to the external conduit (78) of one of the production devices (6, 200).

**8.** The assembly (2) according to claim 7, **characterized in that** each device (6, 200) further comprises an intermediate supply route (82) for an intermediate fluid (11) intended to form an intermediate phase in contact with the second fluid (16), the intermediate supply route (82) being connected downstream to the external conduit (78) and/or to the internal conduit (76),
and **in that** the distribution system (4) further comprises a third ramp (22) for distributing the intermediate fluid (11), the third distribution ramp (22) comprising a tubular manifold (30) comprising at least one inlet orifice (38, 40) and a plurality of outlet orifices (53), the distribution system (4) further comprising third connections (28) each forming a pressure drop, each outlet orifice (53) of the third distribution ramp (22) being connected downstream to one of the third connections (28), each third connection (28) connecting the third distribution ramp (22) to the intermediate supply route (82) of one of the devices (6, 200).

**9.** The assembly (2) according to claim 7 or 8, **characterized in that** each tubular manifold (30) comprises a peripheral wall (34), the peripheral wall (34) comprising a serrated upper portion (44) having at least one tilted plane.

**10.** The assembly (2) according to any one of claims 7 to 9, **characterized in that** the connections (24, 26, 28) forming a pressure drop comprise a helicoidal conduit (74), a plate perforated with holes, a groove formed in a plate, or a flexible or rigid rectilinear tube.

**11.** The assembly (2) according to any one of claims 7 to 10, **characterized in that** each tubular manifold (30) comprises a first inlet orifice (38) and a second inlet orifice (40) opposite to the first inlet orifice (38), each distribution ramp (18, 20, 22) comprising a fluid supply member (32) comprising two opposite branches (64, 66) respectively connected to the first and to the second inlet orifices (38, 40).

**12.** A method for producing dispersed elements (8), each dispersed element comprising a core (10) comprising at least one first fluid (12) and a shell (14) able to retain the core, the shell (14) being formed from a second fluid (16), the method comprising the following steps:

- providing an assembly (2) according to any one of claims 7 to 11;
- supplying the first fluid (12) in the first distribution ramp (18) and supplying the second fluid (16) in the second

distribution ramp (20);
- flowing of the first fluid (12) into the internal conduit (76) and flowing of the second fluid (16) into the external conduit (78) through the external supply route (80);
- injecting the first fluid (12) into the second fluid (16) in order to form the dispersed elements (8);
- flowing of the dispersed elements (8) towards the outside of the assembly (2).

**13.** The method according to claim 12, **characterized in that** it further comprises the following steps:

- supplying an intermediate fluid (11) in a third distribution ramp (22);
- flowing of the intermediate fluid (11) into the external conduit (78) through an intermediate supply route (82);
- injecting the intermediate fluid (11) into the second fluid (16).

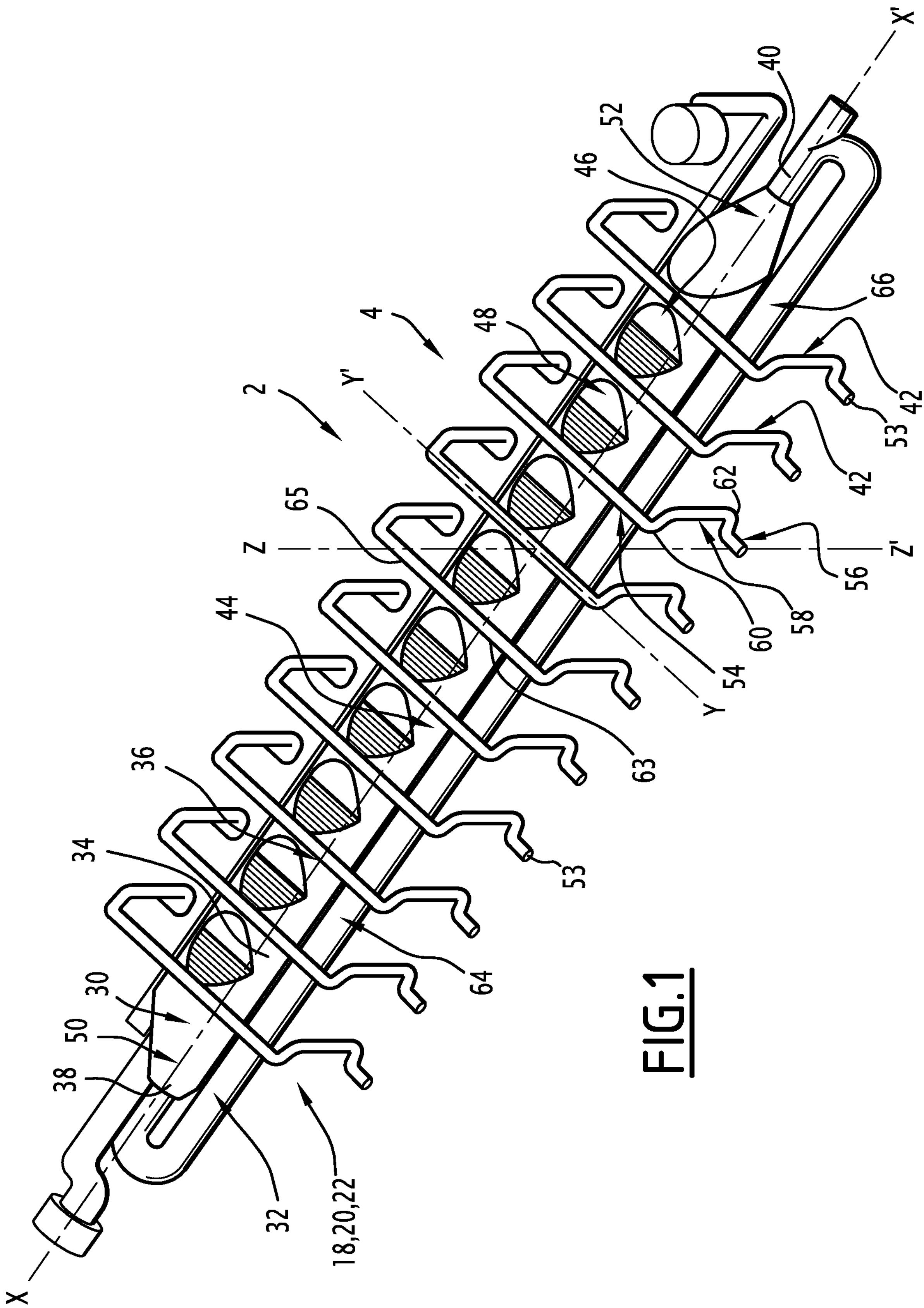
X
X'
Y
Y'
Z
Z'
2
4
18,20,22
30
32
34
36
38
40
42
42
44
46
48
50
52
53
53
54
56
58
60
62
63
64
65
66

FIG.1

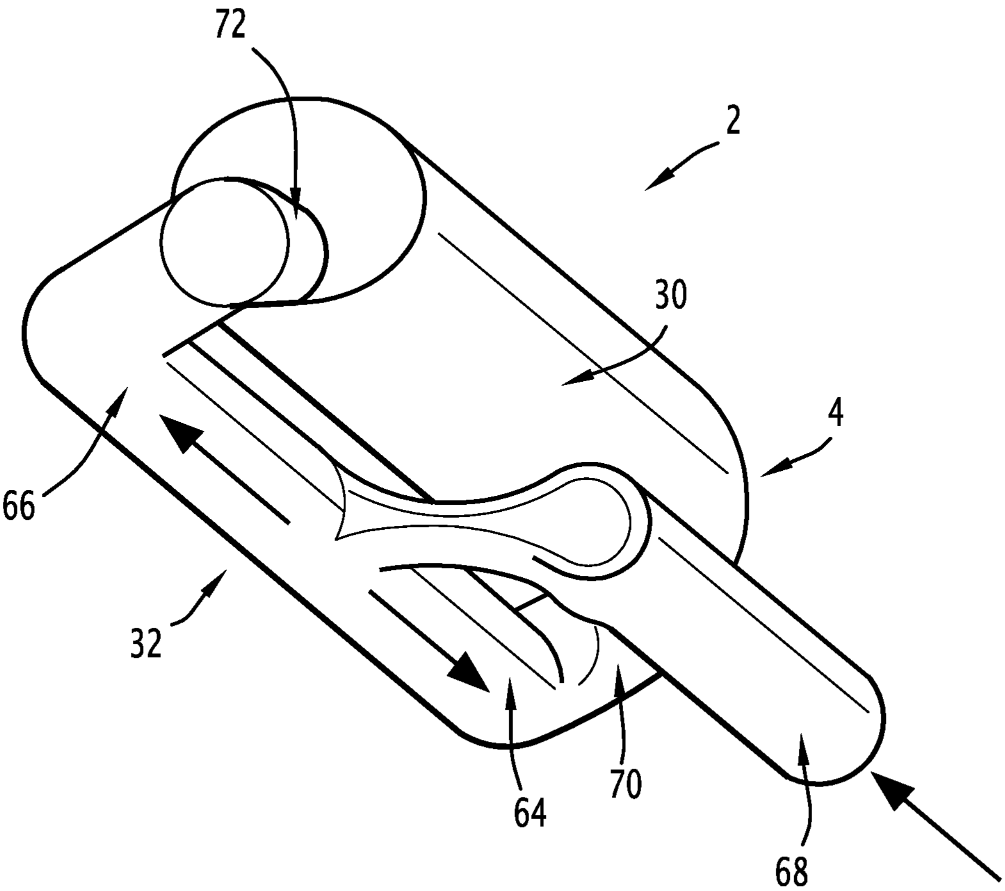


FIG.2

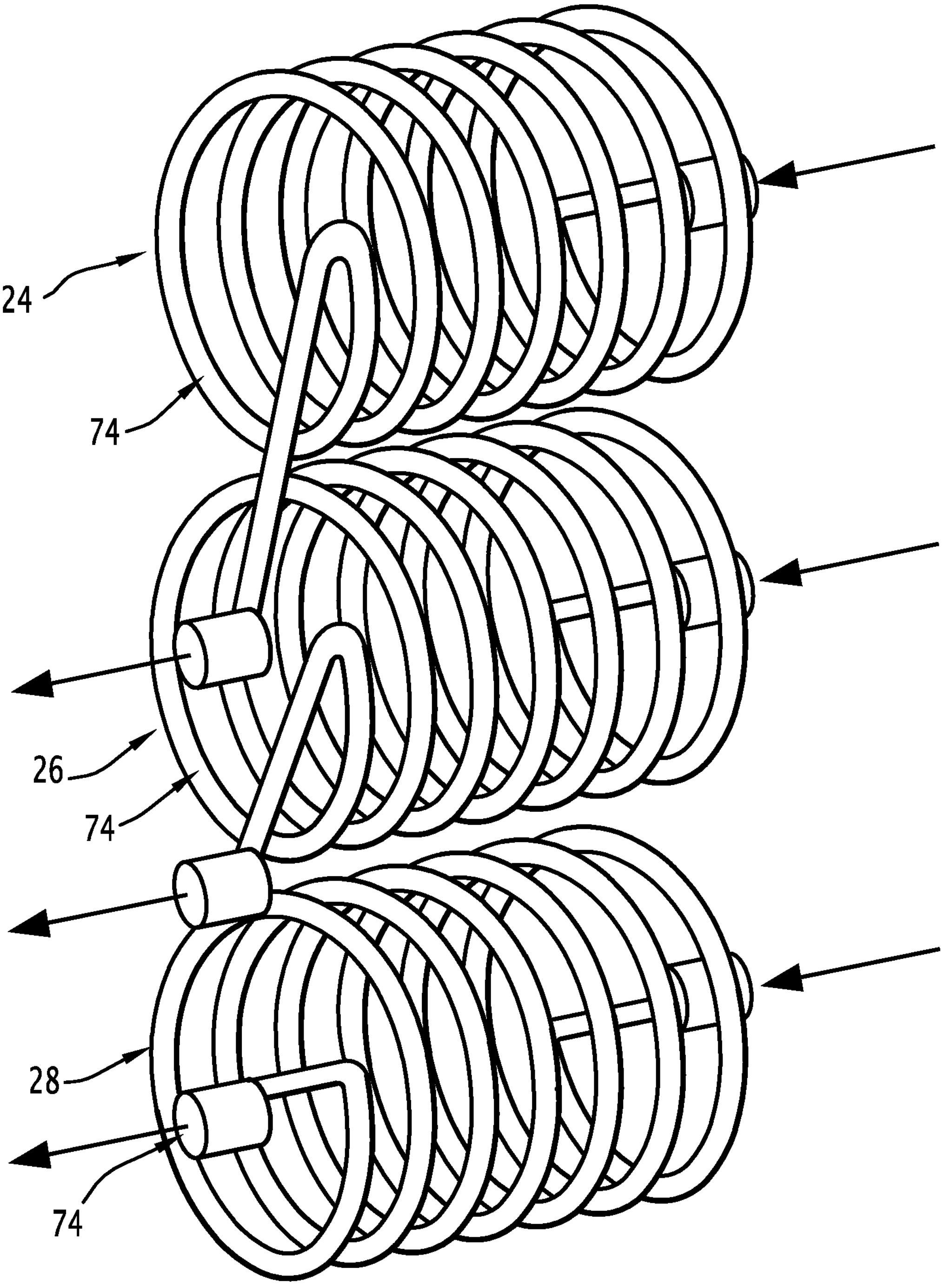


FIG.3

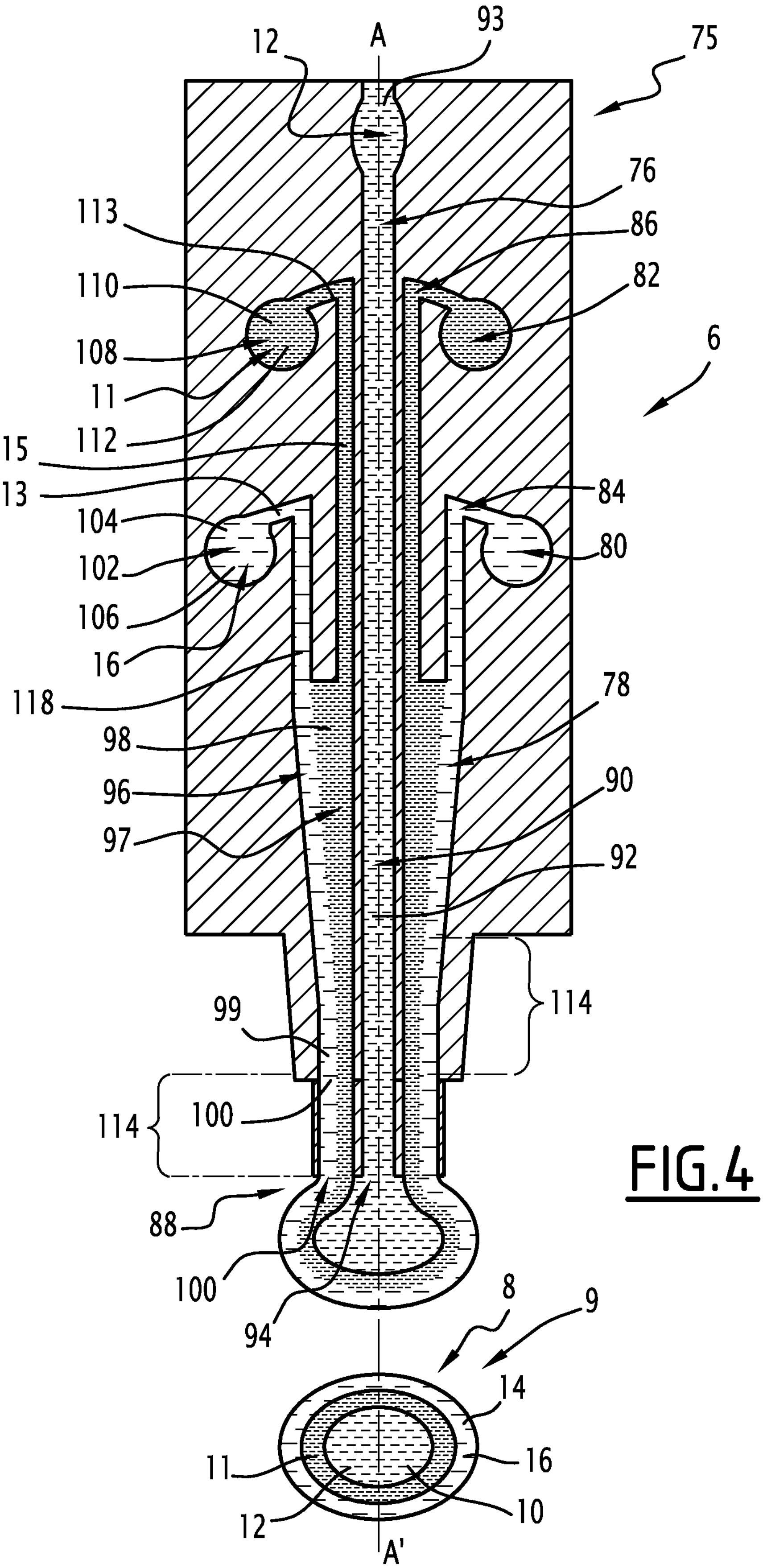
A
93
12
75
76
113
86
110
82
108
6
11
112
115
113
84
104
80
102
106
16
118
78
98
96
90
97
92
114
99
114
100
88
100
94
8
9
14
11
16
12
10
A'

FIG.4

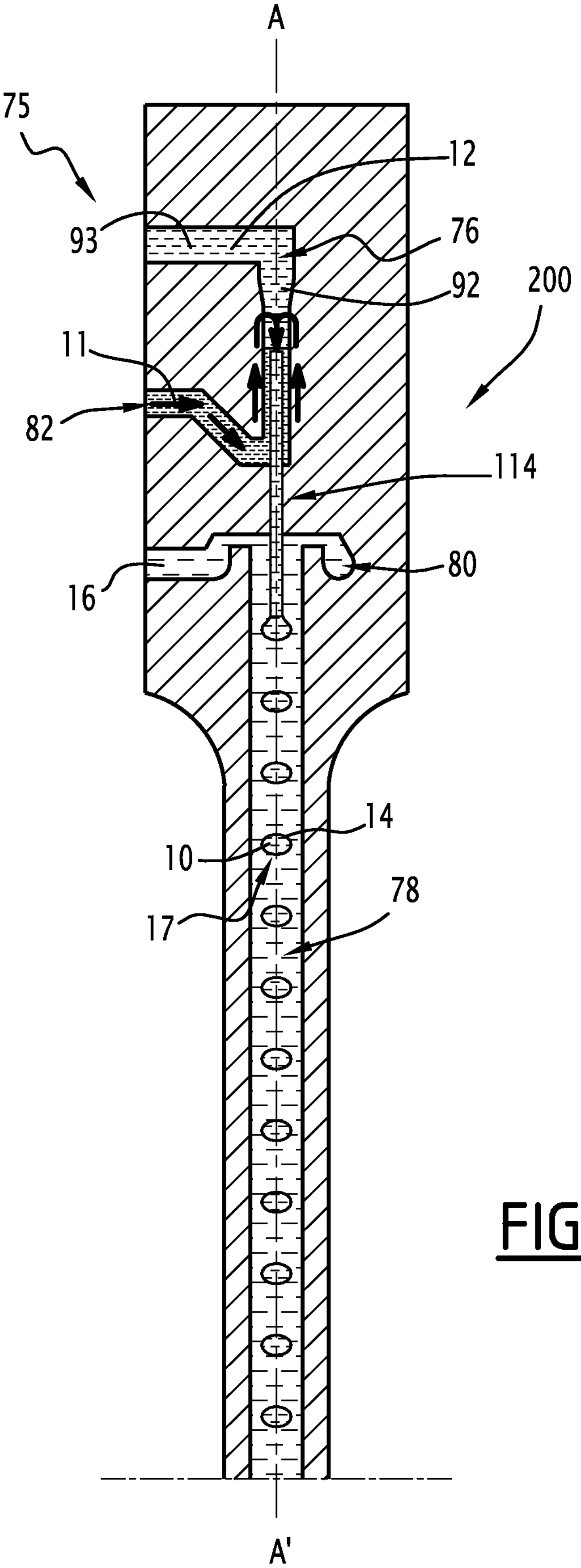


FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 03059503 A
- WO 2010063937 A
- FR 1061404
- WO 2012120043 A


### Littérature non-brevet citée dans la description


- **S. ARCTANDER.** *Perfume and Flavor Chemicals,* 1969
- **S. ARCTANDER.** *Perfume and Flavor Materials of Natural Origin,* 1960
- Flavor and Fragrance Materials. Allured Publishing Co, 1991